# EUROPÄISCHE PATENTANMELDUNG

(11) **EP 3 736 873 A1**
(43) Veröffentlichungstag der Anmeldung: **11.11.2020**
(21) Anmeldenummer: 19173800.4
(22) Anmeldetag: 10.05.2019
(51) Int. Cl.: H01M 2/02, H01M 2/10, H01M 2/20, H01M 2/30, H01M 10/04, H01M 10/42

(54) **AKKUPACK, BEARBEITUNGSSYSTEM UND VERFAHREN ZUR HERSTELLUNG EINES AKKUPACKS**

(71) Anmelder: Andreas Stihl AG & Co. KG, 71336 Waiblingen (DE); Murata Manufacturing Co., Ltd., Nagaokakyo-shi, Kyoto 617-8555 (JP)
(72) Erfinder: SAUERTEIG, Daniel, 71394 Kernen im Remstal (DE); SCHOLL, Julien, 71336 Waiblingen (DE); SATO, Takayuki, Koriyama-shi, 963-0531, Fukushima (JP); MISAWA, Daiki, Koriyama-shi, 963-0531, Fukushima (JP); WILKA, Marcel, 73560 Böbingen (DE); SCHUR, Martin, 73557 Mutlangen (DE); BOSSMANN, Uwe, 73732 Esslingen a.N. (DE); LIEPOLD, Dirk, 70736 Fellbach (DE); WAGNER, Daniel, 73650 Winterbach (DE)
(74) Vertreter: Patentanwälte Ruff, Wilhelm, Beier, Dauster & Partner mbB

(57) **Zusammenfassung**

Die Erfindung bezieht sich auf einen Akkupack (1) zur Versorgung eines elektrisch angetriebenen Bearbeitungsgeräts (101) mit elektrischer Antriebsleistung (AL), wobei der Akkupack (1) aufweist:
- ein Stapelgehäuse (10), wobei das Stapelgehäuse (10) eine durch einen Gehäuserand (10R) definierte, gemeinsame Gehäuseöffnung (10O) aufweist, und
- mehrere Pouchzellen (21), wobei die Pouchzellen (21) Zelltabs (22) aufweisen und derart ausgebildet und in einem Stapel (20) innerhalb des Stapelgehäuses (10) angeordnet sind, dass die Zelltabs (22) mindestens mit Tabteilen (22T) an der gemeinsamen Gehäuseöffnung (10O) über mindestens einen Randabschnitt (10RA) des Gehäuserands (10R) hinausragen, wobei die Tabteile (22T) durch Schweißverbindungen (22S) miteinander unmittelbar elektrisch verbunden sind.

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung, auf ein Bearbeitungssystem aufweisend einen solchen Akkupack und ein elektrisch angetriebenes Bearbeitungsgerät und auf ein Verfahren zur Herstellung eines Akkupacks zur Versorgung eines elektrisch angetriebenen Bearbeitungsgeräts mit elektrischer Antriebsleistung.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, eines Bearbeitungssystems aufweisend einen solchen Akkupack und ein elektrisch angetriebenes Bearbeitungsgerät und eines Verfahrens zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, zugrunde.

Die Erfindung löst die Aufgabe durch die Bereitstellung eines Akkupacks mit den Merkmalen des Anspruchs 1, eines Bearbeitungssystems mit den Merkmalen des Anspruchs 12 und eines Verfahrens mit den Merkmalen des Anspruchs 13. Vorteilhafte Weiterbildungen und/oder Ausgestaltungen der Erfindung sind in den abhängigen Ansprüchen beschrieben.

Der erfindungsgemäße Akkupack ist zur, insbesondere automatischen, Versorgung eines elektrisch angetriebenen Bearbeitungsgeräts, insbesondere Garten-, Forst- und/oder Baubearbeitungsgeräts, mit elektrischer Antriebsleistung ausgebildet bzw. konfiguriert. Der Akkupack weist ein Stapelgehäuse und mehrere Pouchzellen auf. Das Stapelgehäuse weist eine durch einen Gehäuserand, insbesondere der Stapelgehäuses, definierte bzw. begrenzte, gemeinsame Gehäuseöffnung auf. Die Pouchzellen weisen Zelltabs auf und sind derart ausgebildet bzw. konfiguriert und in einem Stapel innerhalb des Stapelgehäuses angeordnet, dass, insbesondere alle, die Zelltabs mindestens mit Tabteilen, insbesondere jeweils, an der gemeinsamen Gehäuseöffnung über mindestens einen Randabschnitt des Gehäuserands hinausragen, insbesondere durch die Gehäuseöffnung nach außen. Insbesondere alle, die Tabteile sind durch Schweißverbindungen miteinander unmittelbar elektrisch verbunden.

Das Hinausragen der Tabteile ermöglicht, dass die Tabteile zeitlich nach dem Anordnen der Pouchzellen in dem Stapel innerhalb des Stapelgehäuses von außen weiterhin relativ gut zugänglich sein können und somit miteinander durch die Schweißverbindungen relativ einfach elektrisch verbunden sein oder werden können, und somit eine relativ einfache Herstellung des Akkupacks.

Insbesondere kann das Stapelgehäuse massiv und/oder quaderförmig sein. Zusätzlich oder alternativ kann das Stapelgehäuse teilweise oder sogar vollständig aus Aluminium bestehen.

Die Pouchzellen können zur Versorgung des Bearbeitungsgeräts mit der Antriebsleistung ausgebildet sein. Zusätzlich oder alternativ können die Pouchzellen Akkumulatorzellen bzw. jeweils einzelne wiederaufladbare Speicherelemente für elektrische Energie auf elektrochemischer Basis sein. Insbesondere können die Pouchzellen Lithium-Ionen-Akkumulatorzellen sein. Weiter zusätzlich oder alternativ können die Pouchzellen parallel oder seriell geschaltet sein. Weiter zusätzlich oder alternativ können die Tabteile, insbesondere jeweils, nächster Pouchzellen durch eine der Schweißverbindungen miteinander unmittelbar elektrisch verbunden sein. Weiter zusätzlich oder alternativ können die Tabteile durch die Schweißverbindungen miteinander unmittelbar mechanisch verbunden sein. Weiter zusätzlich oder alternativ können die Pouchzellen Flachzellen sein. Weiter zusätzlich oder alternativ kann eine Fläche der Pouchzellen rechteckig sein. Weiter zusätzlich oder alternativ können die Pouchzellen gleich, insbesondere typ- und/oder baugleich, sein.

Die Zelltabs können als Kontaktfahnen, Zellkontakte, Terminals, Pole oder Anschluss-Elektroden bezeichnet werden.

Unmittelbar kann ohne Zwischenelement bedeuten.

Die Schweißverbindungen können Laserschweißverbindungen oder Ultraschallschweißverbindungen sein.

Die Pouchzellen können in dem Stapel auf- bzw. übereinander angeordnet sein, insbesondere mit einer jeweiligen Hauptebene parallel zueinander. Zusätzlich oder alternativ kann der Stapel quaderförmig sein. Weiter zusätzlich oder alternativ können die Pouchzellen mit Außen- bzw. Zellhüllen, insbesondere vollständig und/oder nur, in dem Stapel innerhalb des Stapelgehäuses angeordnet sein. Weiter zusätzlich oder alternativ können die Tabteile, insbesondere vollständig und/oder nur, außerhalb des Stapelgehäuses angeordnet sein. Weiter zusätzlich oder alternativ braucht zwischen den Tabteilen und den Außen- bzw. Zellhüllen keine Gehäusewand angeordnet zu sein. Weiter zusätzlich oder alternativ können die Zelltabs mit den Tabteilen, insbesondere jeweils, über einen, insbesondere jeweils, nächsten bzw. benachbarten Randabschnitt hinausragen. Insbesondere können die Zelltabs mit den Tabteilen über den, insbesondere vollständigen, Gehäuserand hinausragen. Weiter zusätzlich oder alternativ können die Zelltabs mit den Tabteilen, insbesondere jeweils, über den mindestens einen Randabschnitt minimal 2 Millimeter (mm), insbesondere minimal 5 mm, insbesondere minimal 10 mm, hinausragen.

In einer Weiterbildung der Erfindung ist die gemeinsame Gehäuseöffnung die einzige Gehäuseöffnung für die Zelltabs, insbesondere die Tabteile, insbesondere zum Hinausragen.

Zusätzlich oder alternativ sind die Pouchzellen derart ausgebildet bzw. konfiguriert und in dem Stapel angeordnet, dass, insbesondere alle, die Zelltabs, insbesondere die Tabteile, insbesondere nur, auf einer, insbesondere einzigen, gemeinsamen Tabseite des Stapels angeordnet sind.

Dies ermöglicht einen relativ einfachen Aufbau des Akkupacks und eine relativ einfache Herstellung des Akkupacks.

Insbesondere können die Pouchzellen, insbesondere jeweils, die Zelltabs an einem gleichen Rand bzw. einer gleichen Kante, insbesondere einer Außen- bzw. Zellhülle der Pouchzelle, aufweisen. Zusätzlich oder alternativ kann die Tabseite eine Quaderseite des Stapels, soweit quaderförmig, sein. Weiter zusätzlich oder alternativ kann der Stapel mit der gemeinsamen Tabseite an der gemeinsamen Gehäuseöffnung angeordnet sein.

In einer Weiterbildung der Erfindung definiert der Gehäuserand eine Öffnungsebene der, insbesondere gemeinsamen, Gehäuseöffnung. Insbesondere alle, die Tabteile verlaufen, insbesondere nur, parallel zu der Öffnungsebene. Dies ermöglicht, dass die Schweißverbindungen relativ einfach hergestellt sein oder werden können. Insbesondere kann die Öffnungsebene parallel zu der Tabseite, soweit vorhanden, sein bzw. verlaufen bzw. die Tabteile können parallel zu der Tabseite verlaufen. Zusätzlich oder alternativ können die Tabteile abgebogene Teile der Zelltabs sein und, insbesondere jeweils, über einen, insbesondere jeweils, in Verlängerung einer Biegungsachse der Zelltabs nächsten bzw. benachbarten Randabschnitt hinausragen. Weiter zusätzlich oder alternativ braucht zwischen den parallel verlaufenden Tabteilen und den Außen- bzw. Zellhüllen keine Gehäusewand angeordnet zu sein.

In einer Weiterbildung der Erfindung weist der Akkupack mindestens einen elektrischen Leistungsverbinder auf. Der elektrische Leistungsverbinder ist mit einem der Tabteile durch eine Schweißverbindung, insbesondere unmittelbar, elektrisch, und insbesondere mechanisch, verbunden. Das Hinausragen des Tabteils ermöglicht, dass das Tabteil zeitlich nach dem Anordnen der Pouchzellen in dem Stapel innerhalb des Stapelgehäuses mit dem Leistungsverbinder durch die Schweißverbindung relativ einfach verbunden sein oder werden kann. Insbesondere kann dies ermöglichen, dass zeitlich nach dem Anordnen der Pouchzellen in dem Stapel innerhalb des Stapelgehäuses die Tabteile miteinander und das Tabteil mit dem Leistungsverbinder in, insbesondere nur, einem, insbesondere einzigen und/oder gemeinsamen, Herstellungsschritt durch die, insbesondere jeweilige, Schweißverbindung verbunden sein oder werden können. Insbesondere kann der elektrische Leistungsverbinder mindestens teilweise zwischen dem parallel verlaufenden Tabteil und dem Randabschnitt, insbesondere parallel zu dem Tabteil, angeordnet sein.

In einer Weiterbildung der Erfindung ist das Stapelgehäuse quaderförmig und weist mindestens vier, insbesondere fünf, Gehäusewände auf. Wandränder von vier der Gehäusewände definieren bzw. begrenzen die, insbesondere gemeinsame, Gehäuseöffnung, insbesondere umfangsseitig.

In einer Weiterbildung der Erfindung weist das Stapelgehäuse eine, insbesondere die, erste Gehäusewand und eine, insbesondere die, zweite Gehäusewand auf. Die zweite Gehäusewand ist zu der ersten Gehäusewand mit einem, insbesondere festen, Abstand gegenüberliegend angeordnet. Der Stapel ist zwischen der ersten Gehäusewand und der zweiten Gehäusewand angeordnet. Eine Höhe des Stapels in einer Stapelrichtung ist durch die erste Gehäusewand und die zweite Gehäusewand, insbesondere ihren Abstand, begrenzt. Insbesondere kann fester Abstand bedeuten, dass der Abstand zwischen der ersten Gehäusewand und der zweiten Gehäusewand sich kaum oder nicht im Vergleich zu Zelldicken der Pouchzellen in der Stapelrichtung verändern kann, insbesondere bei einem Aufblähen der Pouchzellen. Zusätzlich oder alternativ kann die zweite Gehäusewand, insbesondere mit einer Hauptebene, parallel zu der ersten Gehäusewand, insbesondere einer Hauptebene der ersten Gehäusewand, angeordnet sein. Weiter zusätzlich oder alternativ können die Pouchzellen in dem Stapel mit einer jeweiligen Hauptebene orthogonal zu der Stapelrichtung und/oder parallel zu der ersten Gehäusewand, insbesondere einer Hauptebene der ersten Gehäusewand, und/oder parallel zu der zweiten Gehäusewand, insbesondere einer Hauptebene der zweiten Gehäusewand, angeordnet sein. Weiter zusätzlich oder alternativ kann der Stapel mit der Stapelrichtung orthogonal zu der ersten Gehäusewand, insbesondere einer Hauptebene der ersten Gehäusewand, und/oder der zweiten Gehäusewand, insbesondere einer Hauptebene der zweiten Gehäusewand, angeordnet sein. Weiter zusätzlich oder alternativ kann der Abstand in der Stapelrichtung sein. Weiter zusätzlich oder alternativ kann die Höhe dem Abstand entsprechen, insbesondere gleichen.

In einer Ausgestaltung der Erfindung weist das Stapelgehäuse ein erstes Gehäuseteil und ein zweites Gehäuseteil auf. Das erste Gehäuseteil weist die erste Gehäusewand auf. Das zweite Gehäuseteil weist die zweite Gehäusewand auf. Des Weiteren sind das erste Gehäuseteil und das zweite Gehäuseteil durch mindestens eine Schweißverbindung miteinander, insbesondere unmittelbar, mechanisch verbunden. Das Hinausragen der Tabteile ermöglicht, dass zeitlich nach dem Anordnen der Pouchzellen in dem Stapel innerhalb des Stapelgehäuses die Tabteile miteinander, das Tabteil mit dem Leistungsverbinder, soweit vorhanden, und/oder das erste Gehäuseteil und das zweite Gehäuseteil miteinander in, insbesondere nur, einem, insbesondere einzigen und/oder gemeinsamen, Herstellungsschritt durch die, insbesondere jeweilige, Schweißverbindung verbunden sein oder werden können.

In einer Ausgestaltung der Erfindung weist der Akkupack mindestens ein Ausgleichselement auf. Das mindestens eine Ausgleichselement ist in dem Stapel angeordnet. Des Weiteren erstreckt das mindestens eine Ausgleichselement sich über einen Großteil einer Fläche der Pouchzellen und ist dazu ausgebildet bzw. konfiguriert, über eine Ausgleichsdicke des mindestens einen Ausgleichselements die Höhe des Stapels an den, insbesondere festen, Abstand zwischen der ersten Gehäusewand und der zweiten Gehäusewand anzupassen, insbesondere anzugleichen. Insbesondere kann das mindestens eine Ausgleichselement ein Schaumstoff, insbesondere Moosgummi, aufweisen, insbesondere sein. Zusätzlich oder alternativ kann das mindestens eine Ausgleichselement dazu ausgebildet sein, ein Aufblähen, soweit vorhanden, der Pouchzellen in der Stapelrichtung zu puffern. Weiter zusätzlich oder alternativ kann das mindestens eine Ausgleichselement eine thermische Isolierung sein, wobei die mindestens eine thermische Isolierung jeweils zwischen zwei der Pouchzellen angeordnet sein kann. Weiter zusätzlich oder alternativ kann Großteil der Fläche mindestens 70 Prozent (%), insbesondere mindestens 80 %, insbesondere mindestens 90 %, der Fläche bedeuten. Insbesondere kann das mindestens eine Ausgleichselement sich über die komplette Fläche der Pouchzellen erstrecken.

In einer Weiterbildung der Erfindung sind die Pouchzellen derart ausgebildet bzw. konfiguriert und in dem Stapel angeordnet, dass, insbesondere alle, die Zelltabs, insbesondere nur, in, insbesondere genau, zwei Tabspalten angeordnet sind. Abgewandte bzw. entfernte Endgrenzen der Tabspalten definieren bzw. begrenzen, insbesondere nur, einen, insbesondere einzigen, Zwischenbereich. Der Akkupack weist eine Leiterplatte auf. Die Leiterplatte ist, insbesondere vollständig und/oder nur, innerhalb des Zwischenbereichs angeordnet und mit mehreren der Zelltabs, insbesondere Tabteilen, insbesondere jeweils, durch eine Schweißverbindung elektrisch, und insbesondere mechanisch, verbunden. Dies ermöglicht, dass die Zelltabs, insbesondere Tabteile, zeitlich nach dem Anordnen von der Leiterplatte von außen weiterhin relativ gut zugänglich sein können und somit miteinander durch die Schweißverbindungen relativ einfach elektrisch verbunden sein oder werden können. Insbesondere ermöglicht dies, dass zeitlich nach dem Anordnen der Pouchzellen in dem Stapel innerhalb des Stapelgehäuses die Tabteile miteinander, das Tabteil mit dem Leistungsverbinder, soweit vorhanden, das erste Gehäuseteil und das zweite Gehäuseteil miteinander, soweit vorhanden, und/oder die Leiterplatte mit den mehreren Zelltabs, insbesondere Tabteilen, in, insbesondere nur, einem, insbesondere einzigen und/oder gemeinsamen, Herstellungsschritt durch die, insbesondere jeweilige, Schweißverbindung verbunden sein oder werden können. Insbesondere können die Zelltabs der Pouchzellen, insbesondere einer jeweiligen der Pouchzellen, und somit die Tabspalten zueinander beabstandet sein. In anderen Worten: die Pouchzellen können jeweils zwei zueinander beabstandete Zelltabs aufweisen und derart ausgebildet und in dem Stapel angeordnet sein, dass Zelltabs verschiedener der Pouchzellen in einer ersten der Tabspalten und andere Zelltabs verschiedener der Pouchzellen in einer zweiten der Tabspalten angeordnet sein können, wobei die erste Tabspalte und die zweite Tabspalte zueinander beabstandet sein können. Weiter zusätzlich oder alternativ können die Tabspalten als Tabreihen bezeichnet werden. Weiter zusätzlich oder alternativ können die Tabspalten parallel zueinander sein bzw. verlaufen. Weiter zusätzlich oder alternativ kann die Leiterplatte an dem Stapel angeordnet sein. Insbesondere kann an dem Stapel bedeuten, dass die Leiterplatte maximal 20 mm, insbesondere maximal 10 mm, insbesondere maximal 5 mm, zu dem Stapel beabstandet angeordnet sein kann. Weiter zusätzlich oder alternativ braucht die Leiterplatte nicht zu den abgewandten Endgrenzen hinreichen. Weiter zusätzlich oder alternativ kann die Leiterplatte zwischen den Tabspalten, insbesondere zwischen zugewandten bzw. nahen Endgrenzen der Tabspalten, angeordnet sein. Weiter zusätzlich oder alternativ kann die Leiterplatte die Tabspalten, insbesondere jeweils, mindestens teilweise freilassen bzw. nicht verdecken. Weiter zusätzlich oder alternativ kann die Leiterplatte mit den mehreren Zelltabs, insbesondere Tabteilen, mittels elektrischer Zellverbinder elektrisch verbunden sein. Weiter zusätzlich oder alternativ kann die Leiterplatte Messelektronik tragen, wobei die Messelektronik zur, insbesondere automatischen, Messung von, insbesondere elektrischen, Spannungen, insbesondere Werten der Spannungen, insbesondere aller, der Pouchzellen ausgebildet sein kann. Weiter zusätzlich oder alternativ kann die Leiterplatte an der, insbesondere gemeinsamen, Gehäuseöffnung angeordnet sein.

In einer Ausgestaltung der Erfindung weist der Akkupack einen Rahmen auf. Der Rahmen trägt die Leiterplatte und ist an der, insbesondere gemeinsamen, Gehäuseöffnung angeordnet. Insbesondere alle, die Zelltabs, insbesondere Tabteile, und die Leiterplatte sind mittels des Stapelgehäuses und des Rahmens zueinander positioniert, insbesondere fixiert. Das Stapelgehäuse und der Rahmen ermöglichen eine relativ einfache Positionierung. Insbesondere können die Zelltabs, insbesondere Tabteile, an der Gehäuseöffnung angeordnet sein. Zusätzlich oder alternativ kann der Rahmen teilweise oder sogar vollständig aus Kunststoff bestehen.

In einer Weiterbildung der Erfindung weist der Akkupack, insbesondere weisen die Pouchzellen, eine maximale elektrische Antriebsleistung von minimal 1 Kilowatt (kW), insbesondere von minimal 2 kW, und/oder von maximal 10 kW, insbesondere von maximal 5 kW, auf.

Zusätzlich oder alternativ weist der Akkupack, insbesondere weisen die Pouchzellen, eine, insbesondere elektrische, Nennspannung von minimal 10 Volt (V), insbesondere von minimal 20 V, und/oder von maximal 100 V, insbesondere von maximal 50 V, auf.

Zusätzlich oder alternativ weist der Akkupack, insbesondere weisen die Pouchzellen, einen, insbesondere elektrischen, maximalen Energieinhalt von minimal 100 Wattstunden (Wh), insbesondere von minimal 200 Wh, und/oder von maximal 1000 Wh, insbesondere von maximal 500 Wh, auf.

Zusätzlich oder alternativ weist der Akkupack eine Masse von minimal 0,5 Kilogramm (kg), insbesondere von minimal 1 kg, und/oder von maximal 10 kg, insbesondere von maximal 5 kg, auf.

Zusätzlich oder alternativ weist der Akkupack eine Höhe von minimal 2,5 Zentimeter (cm) und/oder von maximal 10 cm, und/oder eine Breite von minimal 5 cm und/oder von maximal 20 cm, und/oder eine Tiefe von minimal 7,5 cm und/oder von maximal 30 cm auf.

Das erfindungsgemäße Bearbeitungssystem weist einen, insbesondere den, Akkupack wie zuvor beschrieben und ein, insbesondere das, elektrisch angetriebenes Bearbeitungsgerät auf. Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungssystem ein Garten-, Forst- und/oder Baubearbeitungssystem sein. Zusätzlich oder alternativ kann das Bearbeitungsgerät ein Garten-, Forst- und/oder Baubearbeitungsgerät sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine maximale Masse von 50 Kilogramm (kg), insbesondere von 20 kg, insbesondere von 10 kg, aufweisen kann. Weiter zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere lösbaren, insbesondere werkzeugfrei und/oder zerstörungsfrei lösbaren, mechanischen Verbindung miteinander ausgebildet sein. Insbesondere kann das Bearbeitungsgerät zum Tragen des Akkupacks ausgebildet sein.

In einer Weiterbildung der Erfindung weist das Bearbeitungsgerät eine Akkuaufnahme, insbesondere einen Akkuschacht, auf. Die Akkuaufnahme ist zum Aufnehmen des Akkupacks ausgebildet bzw. konfiguriert.

In einer Weiterbildung der Erfindung ist das Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

Das erfindungsgemäße Verfahren zur Herstellung eines, insbesondere des, Akkupacks, insbesondere wie zuvor beschrieben, zur Versorgung eines, insbesondere des, elektrisch angetriebenen Bearbeitungsgeräts mit elektrischer Antriebsleistung weist die Schritte auf: a) Anordnen von, insbesondere den, mehreren Pouchzellen derart in einem, insbesondere dem, Stapel innerhalb eines, insbesondere des, Stapelgehäuses, wobei das Stapelgehäuse eine, insbesondere die, durch einen, insbesondere den, Gehäuserand definierte, gemeinsame Gehäuseöffnung aufweist, wobei die Pouchzellen, insbesondere die, Zelltabs aufweisen und derart ausgebildet sind, dass die Zelltabs mindestens mit, insbesondere den, Tabteilen an der gemeinsamen Gehäuseöffnung über, insbesondere den, mindestens einen Randabschnitt des Gehäuserands hinausragen. b) zeitlich nach dem Anordnen Verschweißen der Tabteile zum unmittelbaren elektrischen Verbinden der Tabteile miteinander.

Das Verfahren kann die gleichen Vorteile ermöglichen wie der zuvor beschriebene Akkupack.

Insbesondere kann das Verschweißen ein Laserschweißen oder ein Ultraschallschweißen sein.

In einer Weiterbildung der Erfindung definiert der Gehäuserand eine, insbesondere die, Öffnungsebene der, insbesondere gemeinsamen, Gehäuseöffnung. Die Tabteile verlaufen parallel zu der Öffnungsebene. Der Schritt b) weist auf: Anordnen einer Schweißunterlage, insbesondere eines Schweißambosses, mindestens teilweise zwischen mindestens einem der parallel verlaufenden Tabteile und dem Randabschnitt, insbesondere parallel zu dem Tabteil, und Verschweißen des Tabteils mittels der Schweißunterlage. Dies wird durch das Hinausragen der Tabteile ermöglicht.

In einer Weiterbildung der Erfindung weist das Stapelgehäuse ein, insbesondere das, erstes Gehäuseteil und ein, insbesondere das, zweites Gehäuseteil auf. Das erste Gehäuseteil weist eine, insbesondere die, erste Gehäusewand auf und das zweite Gehäuseteil weist eine, insbesondere die, zweite Gehäusewand auf. Der Schritt a) weist auf: Anordnen des Stapels auf der ersten Gehäusewand und zeitlich danach Anordnen der zweiten Gehäusewand auf dem Stapel derart, dass die zweite Gehäusewand zu der ersten Gehäusewand mit einem, insbesondere dem, Abstand gegenüberliegend angeordnet ist, dass der Stapel zwischen der ersten Gehäusewand und der zweiten Gehäusewand angeordnet ist und eine, insbesondere die, Höhe des Stapels in einer, insbesondere der, Stapelrichtung durch die erste Gehäusewand und die zweite Gehäusewand begrenzt ist. Der Schritt b) weist auf: Verschweißen des ersten Gehäuseteils und des zweiten Gehäuseteils zum, insbesondere unmittelbaren, mechanischen Verbinden des ersten Gehäuseteils und des zweiten Gehäuseteils miteinander. Dies wird durch das Hinausragen der Tabteile ermöglicht. Insbesondere kann das Verschweißen ein Laserschweißen oder ein Ultraschallschweißen sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Bearbeitungssystems aufweisend einen erfindungsgemäßen Akkupack und ein elektrisch angetriebenes Bearbeitungsgerät in Form einer Säge, eines Trennschleifers und eines Blasgeräts,
- Fig. 2: eine Explosionsansicht des Akkupacks der Fig. 1,
- Fig. 3: eine Perspektivansicht eines ersten Gehäuseteils eines Stapelgehäuses des Akkupacks der Fig. 1,
- Fig. 4: eine Perspektivansicht des ersten Gehäuseteils, von Pouchzellen, eines Drucksensors und eines inneren Temperatursensors des Akkupacks der Fig. 1 und eines erfindungsgemäßen Verfahrens,
- Fig. 5: eine Perspektivansicht des ersten Gehäuseteils, von Pouchzellen, des Drucksensors und des inneren Temperatursensors angeordnet in einem Stapel des Akkupacks der Fig. 1 und des erfindungsgemäßen Verfahrens,
- Fig. 6: eine Perspektivansicht des ersten Gehäuseteils, des Stapels und eines zweiten Gehäuseteils des Stapelgehäuses des Akkupacks der Fig. 1 und des erfindungsgemäßen Verfahrens,
- Fig. 7: eine Perspektivansicht des ersten Gehäuseteils, des Stapels, des zweiten Gehäuseteils und einer Leiterplatte des Akkupacks der Fig. 1 und des erfindungsgemäßen Verfahrens,
- Fig. 8: eine Seitenansicht des Stapelgehäuses und von Zelltabs mit Tabteilen der Pouchzellen des Akkupacks der Fig. 1 und einer Schweißunterlage und des erfindungsgemäßen Verfahrens,
- Fig. 9: eine Perspektivansicht des ersten Gehäuseteils, des Stapels, des zweiten Gehäuseteils, der Leiterplatte und einer weiteren Leiterplatte des Akkupacks der Fig. 1,
- Fig. 10: eine Perspektivansicht des ersten Gehäuseteils, des Stapels, des zweiten Gehäuseteils, der Leiterplatte, der weiteren Leiterplatte und einer nochmals weiteren Leiterplatte des Akkupacks der Fig. 1,
- Fig. 11: eine Perspektivansicht von einer Rückseite des ersten Gehäuseteils, des Stapels, des zweiten Gehäuseteils, der Leiterplatte, der weiteren Leiterplatte, der nochmals weiteren Leiterplatte und eines äußeren Temperatursensors des Akkupacks der Fig. 1,
- Fig. 12: eine Perspektivansicht des äußeren Temperatursensors des Akkupacks der Fig. 1,
- Fig. 13: eine Perspektivansicht eines Akkupackgehäuses des Akkupacks der Fig. 1, und
- Fig. 14: eine Schnittansicht des Akkupacks der Fig. 1 aufweisend Vergussmasse.

### DETAILLIERTE BESCHREIBUNG DER AUSFÜHRUNGSBEISPIELE

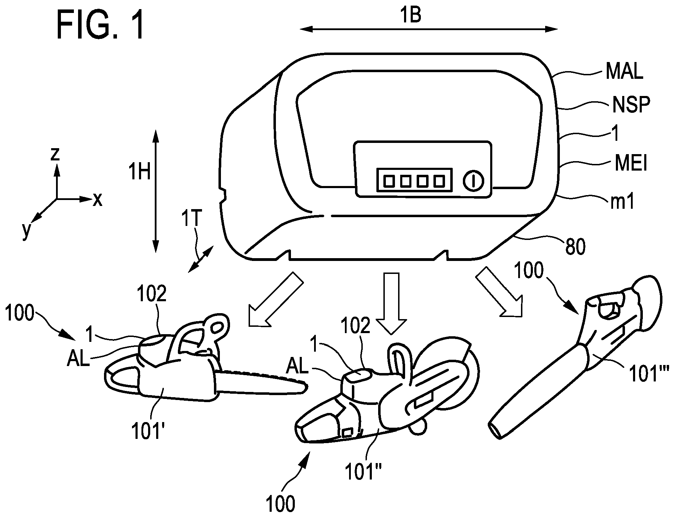

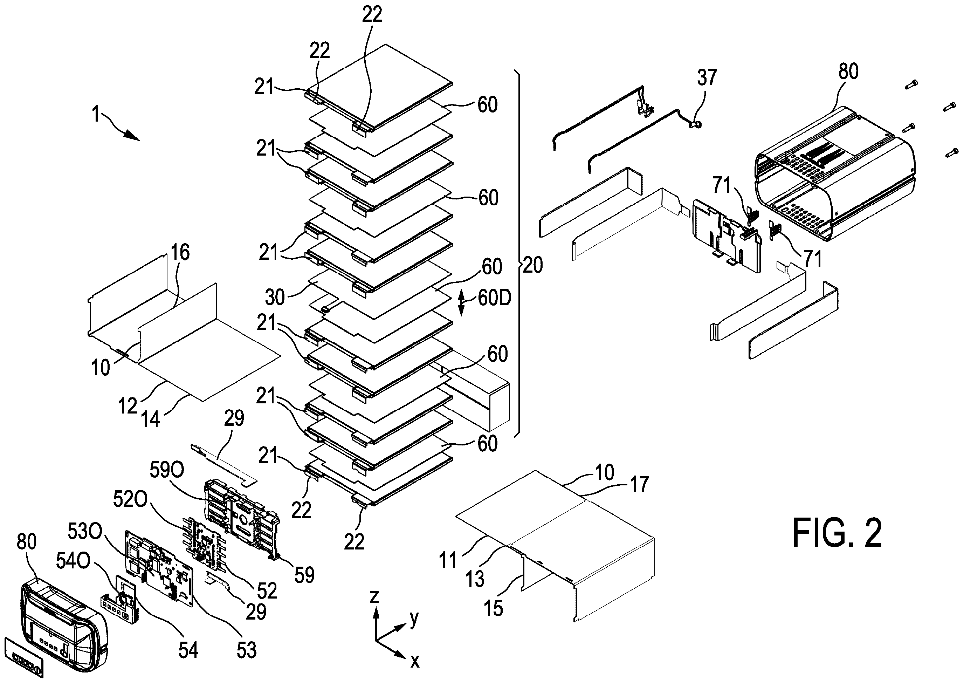

Fig. 1 bis 14 zeigen einen erfindungsgemäßen Akkupack 1 zur Versorgung eines elektrisch angetriebenen Bearbeitungsgeräts 101 mit elektrischer Antriebsleistung AL und ein erfindungsgemäßes Verfahren zur Herstellung des Akkupacks 1 zur Versorgung des elektrisch angetriebenen Bearbeitungsgeräts 101 mit elektrischer Antriebsleistung AL.

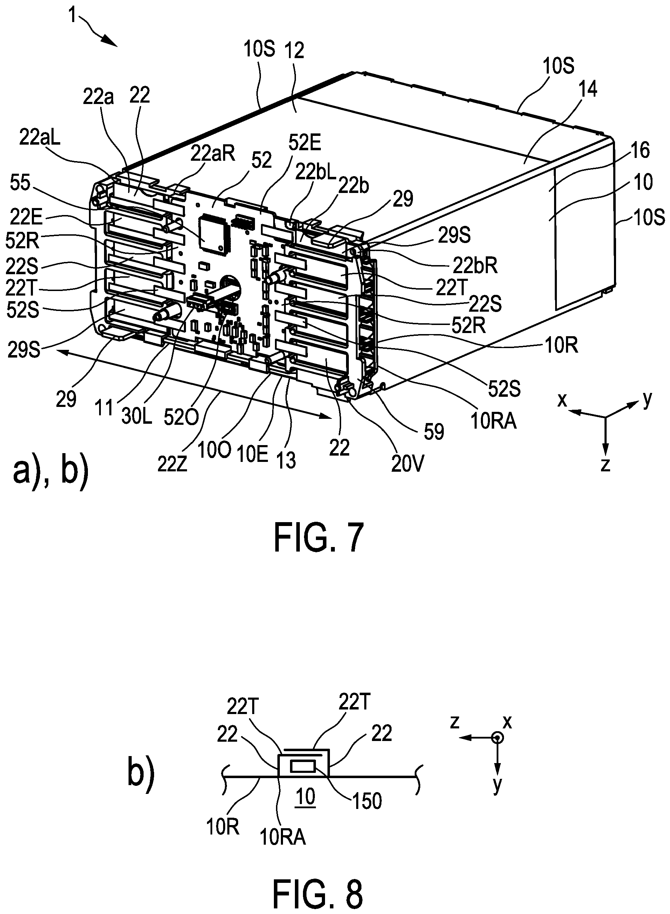

Der Akkupack 1 weist ein Stapelgehäuse 10 und mehrere Pouchzellen 21 auf. Das Stapelgehäuse 10 weist eine durch einen Gehäuserand 10R definierte gemeinsame Gehäuseöffnung 10O auf, wie in Fig. 7 gezeigt. Die Pouchzellen 21 weisen Zelltabs 22 auf und sind derart ausgebildet und in einem Stapel 20 innerhalb des Stapelgehäuses 10 angeordnet, dass die Zelltabs 22 mindestens mit Tabteilen 22T, insbesondere jeweils, an der gemeinsamen Gehäuseöffnung 10O über mindestens einen Randabschnitt 10RA des Gehäuserands 10R hinausragen, insbesondere durch die Gehäuseöffnung 10O nach außen. Die Tabteile 22T sind durch Schweißverbindungen 22S miteinander unmittelbar elektrisch verbunden.

Das Verfahren weist die Schritte auf: a) Anordnen von den mehreren Pouchzellen 21 derart in dem Stapel 20 innerhalb des Stapelgehäuses 10, wobei das Stapelgehäuse 10 die durch den Gehäuserand 10R definierte, gemeinsame Gehäuseöffnung 10O aufweist, wobei die Pouchzellen 21 die Zelltabs 22 aufweisen und derart ausgebildet sind, dass die Zelltabs 22 mindestens mit den Tabteilen 22T an der gemeinsamen Gehäuseöffnung 10O über den mindestens einen Randabschnitt 10RA des Gehäuserands 10R hinausragen. b) zeitlich nach dem Anordnen Verschweißen der Tabteile 22T zum unmittelbaren elektrischen Verbinden der Tabteile 22T miteinander.

Im gezeigten Ausführungsbeispiel weist der Akkupack 1 zehn Pouchzellen 21 auf. In alternativen Ausführungsbeispielen kann der Akkupack mindestens zwei Pouchzellen aufweisen.

Des Weiteren sind im gezeigten Ausführungsbeispiel die Pouchzellen 21 in dem Stapel 20 in einer Stapelrichtung z angeordnet. Außerdem erstrecken im gezeigten Ausführungsbeispiel die Pouchzellen 21 sich jeweils in zu der Stapelrichtung z orthogonalen Richtungen x, y.

Außerdem ragen im gezeigten Ausführungsbeispiel die Zelltabs 22 mit den Tabteilen 22T in der zu der Stapelrichtung orthogonalen Richtung -y hinaus.

Weiter sind im gezeigten Ausführungsbeispiel die Tabteile 22T, insbesondere jeweils, nächster Pouchzellen 21 durch eine der Schweißverbindungen 22S miteinander unmittelbar elektrisch verbunden.

Der Schritt b) weist auf: Verschweißen der Tabteile 22T, insbesondere jeweils, nächster Pouchzellen 21 zum unmittelbaren elektrischen Verbinden der Tabteile 22T nächster Pouchzellen 21 miteinander.

Insbesondere sind die Pouchzellen 21 seriell geschaltet, insbesondere in der Stapelrichtung z.

Im Detail ist die gemeinsame Gehäuseöffnung 10O die einzige Gehäuseöffnung für die Zelltabs 22.

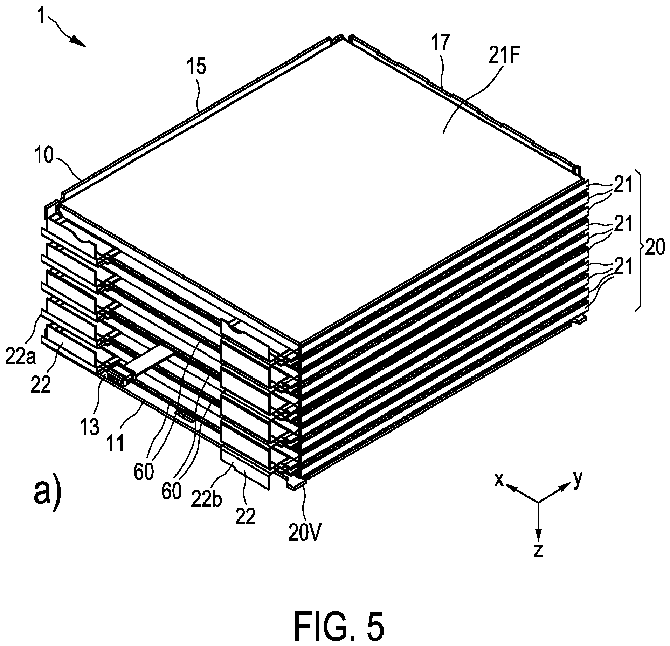

Zusätzlich sind die Pouchzellen 21 derart ausgebildet und in dem Stapel 20 innerhalb des Stapelgehäuses 10 angeordnet, dass die Zelltabs 22 auf einer gemeinsamen Tabseite, insbesondere Vorderseite, 20V des Stapels 20, insbesondere an der gemeinsamen Gehäuseöffnung 10O, angeordnet sind, wie in Fig. 5 bis 7 gezeigt.

Der Schritt a) weist auf: Anordnen von den Pouchzellen 21 derart, wobei die Pouchzellen 21 derart ausgebildet sind, dass die Zelltabs 22 auf der gemeinsamen Tabseite 20V des Stapels 20 angeordnet sind.

Des Weiteren definiert der Gehäuserand 10R eine, insbesondere zu der Tabseite 20V parallele, Öffnungsebene 10E der Gehäuseöffnung 10O. Die Tabteile 22T verlaufen parallel zu der Öffnungsebene 10E.

Im gezeigten Ausführungsbeispiel überdecken bzw. überlappen die Tabteile 22T, insbesondere jeweils, nächster Pouchzellen 21 sich, insbesondere in der Stapelrichtung z.

Außerdem weist der Schritt b) auf: Anordnen einer Schweißunterlage 150, insbesondere eines Schweißambosses, mindestens teilweise zwischen mindestens einem der parallel verlaufenden Tabteile 22T und dem Randabschnitt 10RA, insbesondere parallel zu dem Tabteil 22T, und Verschweißen des Tabteils 22T mittels der Schweißunterlage 150, wie in Fig. 8 gezeigt.

Im gezeigten Ausführungsbeispiel sind die Tabteile 22T, insbesondere aus der Richtung -y in die Richtung z, -z, abgebogene Teile der Zelltabs 22 und stehen, insbesondere jeweils, über einen, insbesondere jeweils, in Verlängerung einer Biegungsachse der Zelltabs 22 nächsten Randabschnitt 10RA hinaus.

Weiter weist der Akkupack 1 mindestens einen elektrischen Leistungsverbinder 29 auf, im gezeigten Ausführungsbeispiel zwei Leistungsverbinder 29. Der elektrische Leistungsverbinder 29 ist mit einem der Tabteile 22T durch eine Schweißverbindung 29S, insbesondere unmittelbar, elektrisch verbunden.

Der Schritt a) weist auf: Anordnen von dem mindestens einen elektrischen Leistungsverbinder 29 an dem Tabteil 22T, insbesondere zeitlich nach dem Anordnen der Pouchzellen 21. Der Schritt b) weist auf: Verschweißen des elektrischen Leistungsverbinders 29 mit dem Tabteil 22T zum, insbesondere unmittelbaren, elektrischen Verbinden des elektrischen Leistungsverbinders 29 mit dem Tabteil 22.

Im gezeigten Ausführungsbeispiel ist der elektrische Leistungsverbinder 29 mindestens teilweise zwischen dem parallel verlaufenden Tabteil 22T und dem Randabschnitt 10RA, insbesondere parallel zu dem Tabteil 22T, angeordnet.

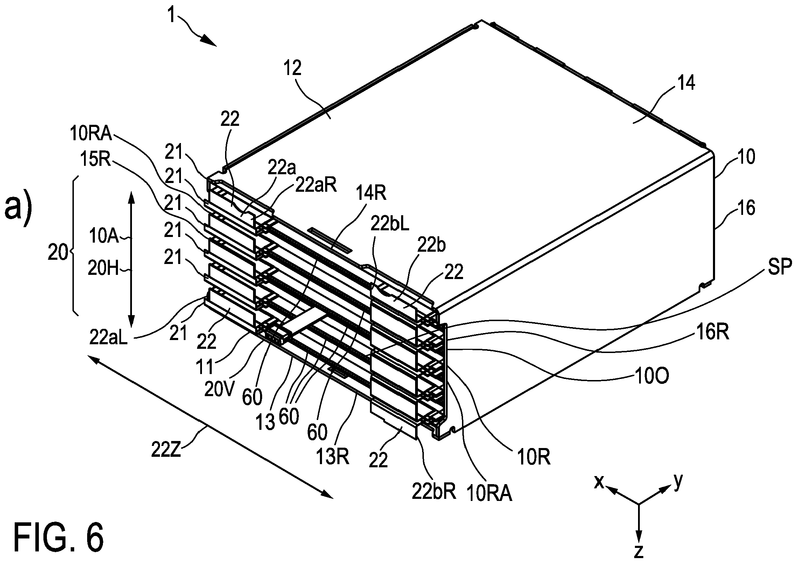

Zudem ist das Stapelgehäuse 10 quaderförmig und weist mindestens vier, im gezeigten Ausführungsbeispiel fünf, Gehäusewände 13, 14, 15, 16, 17 auf. Wandränder 13R, 14R, 15R, 16R von vier der Gehäusewände 13, 14, 15, 16 definieren die Gehäuseöffnung 10O, insbesondere umfangsseitig wie in Fig. 6 gezeigt.

Eine der, insbesondere vier, Gehäusewände ist eine erste Gehäusewand 13. Eine andere der, insbesondere vier, Gehäusewände ist eine zweite Gehäusewand 14.

Die zweite Gehäusewand 14 ist zu der ersten Gehäusewand 13 mit einem Abstand 10A gegenüberliegend angeordnet. Der Stapel 20 ist zwischen der ersten Gehäusewand 13 und der zweiten Gehäusewand 14 angeordnet. Eine Höhe 20H des Stapels 20 in der Stapelrichtung z ist durch die erste Gehäusewand 13 und die zweite Gehäusewand 14 begrenzt.

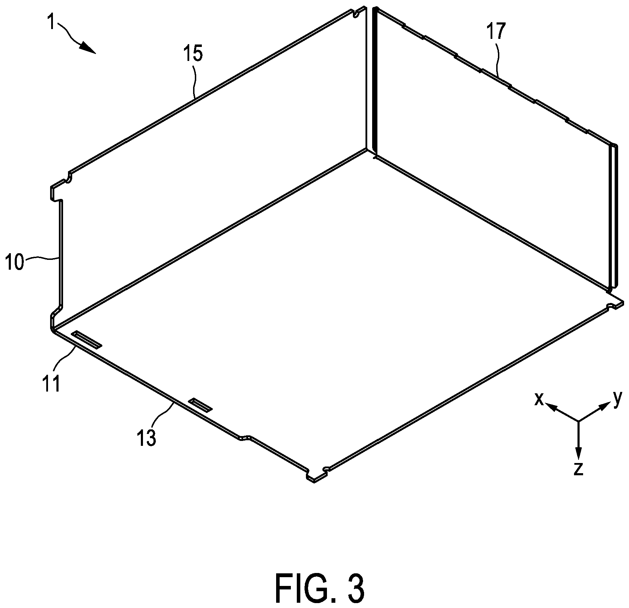

Im Detail weist das Stapelgehäuse 10 ein erstes Gehäuseteil 11, wie in Fig. 3 gezeigt, und ein zweites Gehäuseteil 12, wie in Fig. 6 gezeigt, auf. Das erste Gehäuseteil 11 weist die erste Gehäusewand 13 auf. Das zweite Gehäuseteil 12 weist die zweite Gehäusewand 14 auf. Des Weiteren sind das erste Gehäuseteil 11 und das zweite Gehäuseteil 12 durch mindestens eine Schweißverbindung 10S miteinander, insbesondere unmittelbar, mechanisch verbunden, wie in Fig. 7 gezeigt.

Der Schritt a) weist auf: Anordnen des Stapels 20 auf der ersten Gehäusewand 13 und zeitlich danach Anordnen der zweiten Gehäusewand 13 auf dem Stapel 20 derart, dass die zweite Gehäusewand 14 zu der ersten Gehäusewand 13 mit dem Abstand 10A gegenüberliegend angeordnet ist, dass der Stapel 20 zwischen der ersten Gehäusewand 13 und der zweiten Gehäusewand 14 angeordnet ist und die Höhe 20H des Stapels 20 in der Stapelrichtung z durch die erste Gehäusewand 13 und die zweite Gehäusewand 14 begrenzt ist. Der Schritt b) weist auf: Verschweißen des ersten Gehäuseteils 13 und des zweiten Gehäuseteils 14 zum, insbesondere unmittelbaren, mechanischen Verbinden des ersten Gehäuseteils 13 und des zweiten Gehäuseteils 14 miteinander.

Im gezeigten Ausführungsbeispiel weist das erste Gehäuseteil 11 die erste Gehäusewand bzw. Oberseitenwand 13, die Gehäusewand, insbesondere Umfangsseitenwand, 15 und die Gehäusewand, insbesondere die Rückseitenwand, 17 auf. Das zweite Gehäuseteil 12 weist die zweite Gehäusewand bzw. Unterseitenwand 14 und die Gehäusewand, insbesondere Umfangsseitenwand, 16 auf.

Außerdem erstrecken im gezeigten Ausführungsbeispiel die erste Gehäusewand 13 und die zweite Gehäusewand 14 sich jeweils in den zu der Stapelrichtung z orthogonalen Richtungen x, y. Weiter ist im gezeigten Ausführungsbeispiel der Abstand 10A in der Stapelrichtung z. Zudem gleicht im gezeigten Ausführungsbeispiel die Höhe 20H dem Abstand 10A.

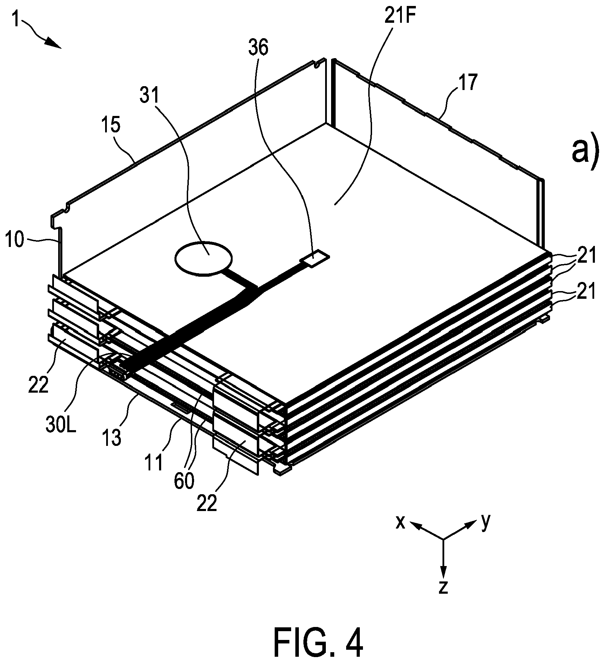

Des Weiteren weist der Akkupack 1 mindestens ein Ausgleichselement 60 auf, wie in Fig. 4 bis 6 gezeigt. Das mindestens eine Ausgleichselement 60 ist in dem Stapel 20 angeordnet. Außerdem erstreckt das mindestens eine Ausgleichselement 60 sich über einen Großteil einer Fläche 21F der Pouchzellen 21 und ist dazu ausgebildet, über eine Ausgleichsdicke 60D des mindestens einen Ausgleichselements 60 die Höhe 20H des Stapels 20 an den Abstand 10A zwischen der ersten Gehäusewand 13 und der zweiten Gehäusewand 14 anzupassen, insbesondere anzugleichen, und insbesondere ein Aufblähen, soweit vorhanden, der Pouchzellen 21 in der Stapelrichtung z zu puffern.

Im gezeigten Ausführungsbeispiel weist der Akkupack 1 fünf Ausgleichselemente 60 auf. In alternativen Ausführungsbeispielen kann der Akkupack nur ein einziges Ausgleichselement aufweisen.

Insbesondere sind zwischen jeweils zwei der Ausgleichselemente 60 zwei der Pouchzellen 21 angeordnet. Dies ermöglicht, dass die Zelltabs 22 gleich sein können, insbesondere die Tabteile 22 in der Stapelrichtung z gleich lang.

Weiter erstreckt im gezeigten Ausführungsbeispiel das mindestens eine Ausgleichselement 60 sich in den zu der Stapelrichtung z orthogonalen Richtungen x, y. Zudem erstreckt im gezeigten Ausführungsbeispiel das mindestens eine Ausgleichselement 60 sich über die komplette Fläche 21F der Pouchzellen 21.

Zusätzlich ist im gezeigten Ausführungsbeispiel das mindestens eine Ausgleichselement 60 eine thermische Isolierung.

Des Weiteren sind die Pouchzellen 21 derart ausgebildet und in dem Stapel 20 angeordnet, dass die Zelltabs 22 in zwei Tabspalten 22a, 22b angeordnet sind, wie in Fig. 5 bis 7 gezeigt. Abgewandte Endgrenzen 22aL, 22bR der Tabspalten 22a, 22b definieren einen Zwischenbereich 22Z. Der Akkupack 1 weist eine Leiterplatte 52 auf. Die Leiterplatte 52 ist innerhalb des Zwischenbereichs 22Z angeordnet und mit mehreren der Zelltabs 22, insbesondere Tabteilen 22T, insbesondere jeweils, durch eine Schweißverbindung 52S elektrisch verbunden.

Der Schritt a) weist auf: Anordnen von den Pouchzellen 21 derart in dem Stapel 20, wobei die Pouchzellen 21 derart ausgebildet sind, dass die Zelltabs 22 in den zwei Tabspalten 22a, 22b angeordnet sind, wobei die abgewandten Endgrenzen 22aL, 22bR der Tabspalten 22a, 22b den Zwischenbereich 22Z definieren. Anordnen von der Leiterplatte 52 innerhalb des Zwischenbereichs 22Z, insbesondere zeitlich nach dem Anordnen der Pouchzellen 21. Der Schritt b) weist auf: Verschweißen der Leiterplatte 52 mit den mehreren der Zelltabs 22, insbesondere Tabteilen 22T, insbesondere jeweils, zum elektrischen Verbinden der Leiterplatte 52 mit den Zelltabs 22, insbesondere Tabteilen 22T.

Im gezeigten Ausführungsbeispiel sind bzw. verlaufen die Tabspalten 22a, 22b in der Stapelrichtung z. Außerdem definieren bzw. begrenzen im gezeigten Ausführungsbeispiel die abgewandten Endgrenzen 22aL, 22bR der Tabspalten 22a, 22b den Zwischenbereich 22Z in der zu der Stapelrichtung z orthogonalen Richtung x, -x.

Weiter ist im gezeigten Ausführungsbeispiel die Leiterplatte 52 zwischen den Tabspalten 22a, 22b, insbesondere zwischen zugewandten Endgrenzen 22aR, 22bL der Tabspalten 22a, 22b, angeordnet. Zudem ist im gezeigten Ausführungsbeispiel die Leiterplatte 52 auf der Tabseite, insbesondere Vorderseite, 20V an dem Stapel 20 und an der Gehäuseöffnung 10O angeordnet.

Im Detail weist der Akkupack 1 einen Rahmen 59 auf. Der Rahmen 59 trägt die Leiterplatte 52 und ist an der Gehäuseöffnung 10O angeordnet. Die Zelltabs 22, insbesondere Tabteile 22T, und die Leiterplatte 52 sind mittels des Stapelgehäuses 10 und des Rahmens 59 zueinander positioniert.

Der Schritt a) weist auf: Anordnen von dem Rahmen 59 derart an der Gehäuseöffnung 10O, dass die Zelltabs 22, insbesondere Tabteile 22T, und die Leiterplatte 52 mittels des Stapelgehäuses 10 und des Rahmens 59 zueinander positioniert sind, insbesondere zeitlich nach dem Anordnen der Pouchzellen 21.

Im gezeigten Ausführungsbeispiel sind die Zelltabs 22, insbesondere Tabteile 22T, an der Gehäuseöffnung 10O angeordnet.

Des Weiteren ist im gezeigten Ausführungsbeispiel die Leiterplatte 52 mit einer Plattenebene 52E parallel zu der Tabseite 20V angeordnet. Insbesondere entspricht die Plattenebene 52E einer durch die Tabspalten 22a, 22b, insbesondere durch die parallel verlaufenden Tabteile 22T, definierten Tabebene 22E.

Außerdem trägt im gezeigten Ausführungsbeispiel die Leiterplatte 52 Messelektronik 55. Die Messelektronik 55 ist zur Messung von Spannungen SP der Pouchzellen 21 ausgebildet.

Weiter sind im gezeigten Ausführungsbeispiel elektrische Verbindungen 52eV', insbesondere elektrische Zellverbinder 52eV", zwischen der Leiterplatte 52, insbesondere der Messelektronik 55, und mehreren der Zelltabs 22, insbesondere Tabteilen 22T, gleich, insbesondere kurz.

Zudem ist im gezeigten Ausführungsbeispiel die Leiterplatte 52, insbesondere die Messelektronik 55, mit den mehreren der Zelltabs 22, insbesondere Tabteilen 22T, mittels der elektrischen Zellverbinder 52eV", und insbesondere durch die Schweißverbindungen 52S, elektrisch verbunden.

Der Schritt b) weist auf: Verschweißen der elektrischen Zellverbinder 52eV" mit den mehreren der Zelltabs 22, insbesondere Tabteilen 22T, insbesondere jeweils, zum elektrischen Verbinden der elektrischen Zellverbinder 52eV" mit den Zelltabs 22, insbesondere Tabteilen 22T.

Des Weiteren sind im gezeigten Ausführungsbeispiel die Zellverbinder 52eV" unflexibel.

Insbesondere sind die Zellverbinder 52eV" zeitlich vor dem Schritt a) mit einem jeweiligen Ende mit der Leiterplatte 52, insbesondere mechanisch, verbunden. Somit sind die Zellverbinder 52eV" zeitlich nach dem Schritt a) und zeitlich vor dem Schritt b) mit einem jeweiligen anderen Ende an den Zelltabs 22, insbesondere Tabteilen 22T, positioniert.

Außerdem ragen im gezeigten Ausführungsbeispiel die Zellverbinder 52eV", insbesondere jeweils, über einen Plattenrand 52R der Leiterplatte 52, insbesondere in der zu der Stapelrichtung z orthogonalen Richtung x, -x mindestens einer der Endgrenzen 22aL, 22bR der Tabspalten 22a, 22b, hinaus.

Weiter sind im gezeigten Ausführungsbeispiel die Zellverbinder 52eV" entfernter als die, insbesondere mehreren der, Tabteile 22T von dem Stapel 20 bzw. Außenhüllen der Pouchzellen 21 angeordnet.

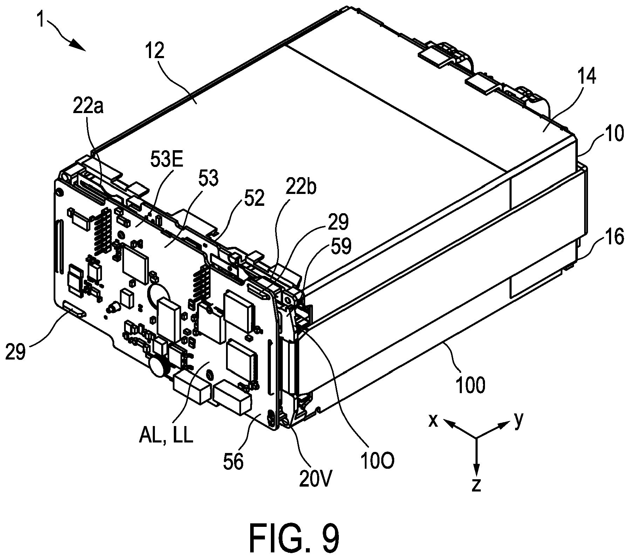

Zudem weist im gezeigten Ausführungsbeispiel der Akkupack 1 eine weitere Leiterplatte 53 auf, wie in Fig. 9 gezeigt. Die weitere Leiterplatte 53 ist auf der Tabseite, insbesondere Vorderseite, 20V entfernter als die Leiterplatte 52 von dem Stapel 20 angeordnet, insbesondere mit einer weiteren Plattenebene 53E parallel zu der Tabseite 20V.

Die weitere Leiterplatte 53 ist breiter als die Tabspalten 22a, 22b.

Zusätzlich trägt die weitere Leiterplatte 53 Leistungselektronik 56. Die Leistungselektronik 56 ist zur, insbesondere automatischen, Steuerung, insbesondere Beendigung, der Abgabe der Antriebsleistung AL von dem Akkupack 1 und/oder einer Aufnahme von Ladeleistung LL durch den Akkupack 1, insbesondere in Abhängigkeit von den gemessenen Spannungen SP, ausgebildet.

Im gezeigten Ausführungsbeispiel entspricht, insbesondere gleicht, die Breite der weiteren Leiterplatte 53 einer Breite des Stapels 20, insbesondere in der zu der Stapelrichtung z orthogonalen Richtung x.

Des Weiteren tragen/trägt im gezeigten Ausführungsbeispiel der Rahmen 59 und/oder die Leiterplatte 52 die weitere Leiterplatte 53.

Außerdem ist im gezeigten Ausführungsbeispiel die weitere Leiterplatte 53, insbesondere die Leistungselektronik 56, mit der Leiterplatte 52, insbesondere der Messelektronik 55, elektrisch verbunden.

Weiter ist im gezeigten Ausführungsbeispiel die weitere Leiterplatte 53, insbesondere die Leistungselektronik 56, mit dem mindestens einen elektrischen Leistungsverbinder 29 elektrisch verbunden.

Insbesondere ist die Leiterplatte 52, insbesondere die Messelektronik 55, mit allen der Zelltabs 22 mit Ausnahme des Zelltabs 22 auf Masse (Englisch: Ground; Abkürzung GND) - 0. Zellpotential - und des Zelltabs 22 auf Nennspannung NSP des Akkupacks 1 - 10. Zellpotential - mittels der elektrischen Zellverbinder 52eV" elektrisch verbunden. Die Leiterplatte 52, insbesondere die Messelektronik 55, ist mit dem Zelltab 22 auf Masse und dem Zelltab 22 auf Nennspannung NSP mittels der elektrischen Leistungsverbinder 29 und der weiteren Leiterplatte 53 elektrisch verbunden. In alternativen Ausführungsbeispielen kann die Leiterplatte, insbesondere die Messelektronik, mit dem Zelltab auf Masse und/oder dem Zelltab auf Nennspannung, insbesondere jeweils, mittels eines elektrischen Zellverbinders elektrisch verbunden sein.

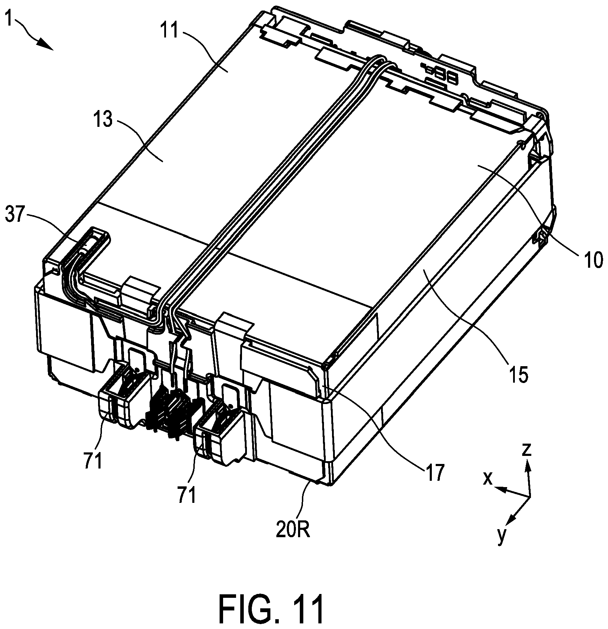

Zudem weist im gezeigten Ausführungsbeispiel der Akkupack 1 mehrere Akkupackkontakte 71 auf, wie in Fig. 11 gezeigt. Die Akkupackkontakte 71 sind zur elektrischen Verbindung des Akkupacks 1 und des Bearbeitungsgeräts 101 miteinander zur Versorgung des Bearbeitungsgeräts 101 mit elektrischer Antriebsleistung AL von dem Akkupack 1 ausgebildet. Des Weiteren ist die weitere Leiterplatte 53, insbesondere die Leistungselektronik 56, mit den Akkupackkontakten 71 elektrisch verbunden.

Insbesondere sind die Akkupackkontakte 71 auf einer der Tabseite, insbesondere Vorderseite, 20V des Stapels 20 gegenüberliegenden Rückseite 20R des Stapels 20 angeordnet, insbesondere an dem Stapelgehäuse 10, insbesondere an der Gehäusewand bzw. Rückseitenwand 17.

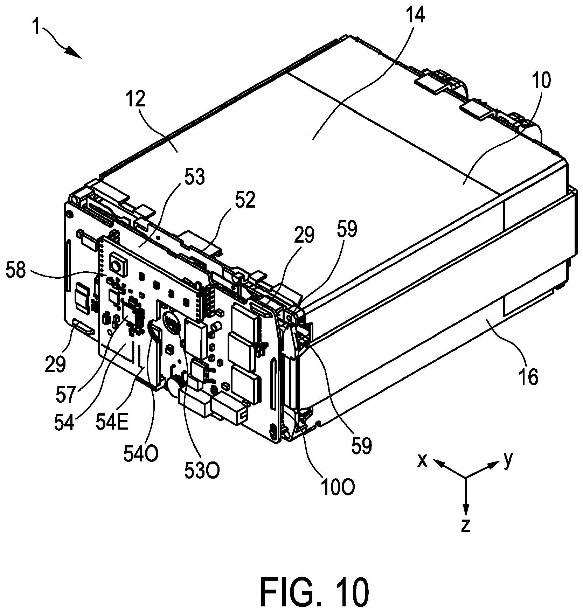

Außerdem weist im gezeigten Ausführungsbeispiel der Akkupack 1 eine, insbesondere nochmals, weitere Leiterplatte 54 auf, wie in Fig. 10 gezeigt. Die, insbesondere nochmals, weitere Leiterplatte 54 ist auf der Tabseite, insbesondere Vorderseite, 20V entfernter als die Leiterplatte 52, und insbesondere als die weitere Leiterplatte 53, von dem Stapel 20 angeordnet, insbesondere mit einer, insbesondere nochmals, weiteren Plattenebene 54E parallel zu der Tabseite 20V. Die, insbesondere nochmals, weitere Leiterplatte 54 trägt Benutzerschnittstellenelektronik 57 und Übertragungselektronik 58. Die Benutzerschnittstellenelektronik 57 ist zur, insbesondere automatischen, Interaktion mit einem Benutzer ausgebildet. Die Übertragungselektronik 58 ist zur, insbesondere automatischen, kabellosen Übertragung von mindestens einem Betriebsparameter und/oder Betriebszustand ausgebildet.

Im gezeigten Ausführungsbeispiel ist die Benutzerschnittstellenelektronik 57 zum Ausgeben, insbesondere Anzeigen, eines Ladezustands des Akkupacks 1 ausgebildet.

Weiter trägt im gezeigten Ausführungsbeispiel die weitere Leiterplatte 53 die, insbesondere nochmals, weitere Leiterplatte 54.

Zudem ist im gezeigten Ausführungsbeispiel die, insbesondere nochmals, weitere Leiterplatte 54, insbesondere sind die Benutzerschnittstellenelektronik 57 und die Übertragungselektronik 58, mit der Leiterplatte 52, insbesondere der Messelektronik 55, und/oder der weiteren Leiterplatte 53, insbesondere der Leistungselektronik 56, elektrisch verbunden.

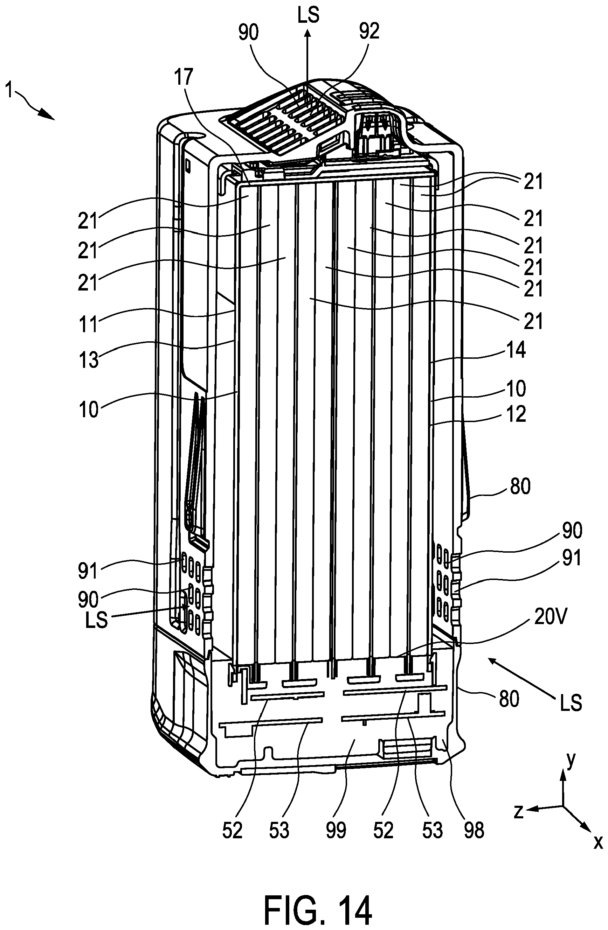

Des Weiteren weist im gezeigten Ausführungsbeispiel die Leiterplatte 52, und insbesondere die mindestens eine weitere Leiterplatte 53, 54, insbesondere jeweils, eine Aussparung 52O, 53O, 54O, insbesondere ein Durchgangsloch, auf. Die Aussparung 52O, 53O, 54O ist zur Durchführung einer Sensorleitung 30L, für einen Fluss von Vergussmasse 99, wie in Fig. 14 gezeigt, und/oder zur Positionierung der Leiterplatte 52, insbesondere der Leiterplatten 52, 53, 54 zueinander, ausgebildet.

Im gezeigten Ausführungsbeispiel weist der Akkupack 1 einen Drucksensor 31 auf, wie in Fig. 4 gezeigt. Der Drucksensor 31 ist zur Erfassung, insbesondere Messung, einer Druckkraft in der Stapelrichtung z wirkend auf die Pouchzellen 21 ausgebildet. Außerdem weist der Akkupack 1 einen inneren Temperatursensor 36 auf. Der innere Temperatursensor 36 ist zur Messung einer inneren Temperatur des Stapels 20 ausgebildet. Die Sensorleitung 30L ist von dem Drucksensor 31 und dem inneren Temperatursensor 36. Die Leiterplatte 52, insbesondere die Messelektronik 55, ist mit dem Drucksensor 31 und dem inneren Temperatursensor 36 mittels der Sensorleitung 30L elektrisch verbunden.

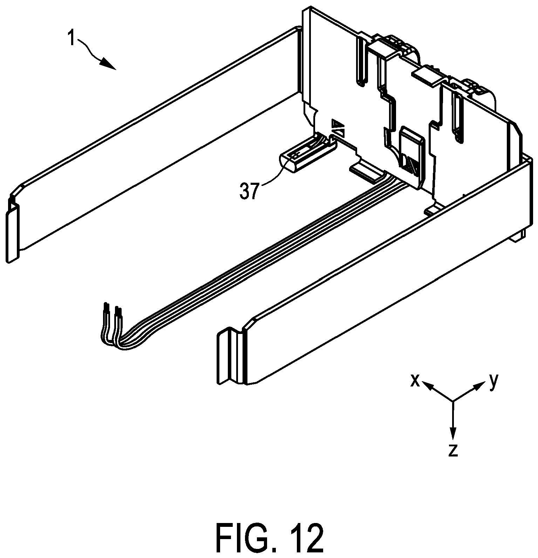

Außerdem weist im gezeigten Ausführungsbeispiel der Akkupack 1 einen äußeren Temperatursensor 37 auf, wie in Fig. 11 und 12 gezeigt. Der äußere Temperatursensor 37 ist zur Messung einer äußeren Temperatur des Stapels 20 ausgebildet. Die Leiterplatte 52, insbesondere die Messelektronik 55, ist mit dem Temperatursensor 37 elektrisch verbunden.

Weiter ist im gezeigten Ausführungsbeispiel die Leistungselektronik 56 zur Steuerung der Abgabe der Antriebsleistung AL von dem Akkupack 1 und/oder der Aufnahme von der Ladeleistung LL durch den Akkupack 1 in Abhängigkeit von der erfassten, insbesondere gemessenen, Druckkraft, der gemessenen inneren Temperatur und der gemessenen äußeren Temperatur ausgebildet.

Zudem sind im gezeigten Ausführungsbeispiel die Zelltabs 22 und die mindestens eine Leiterplatte 52, 53, 54 durch die, insbesondere wärmeleitfähige, Vergussmasse 99, insbesondere in einem gemeinsamen Vergussblock 98, eingeschlossen. Die Vergussmasse 99 reicht bis zu Außenhüllen der Pouchzellen 21 hin.

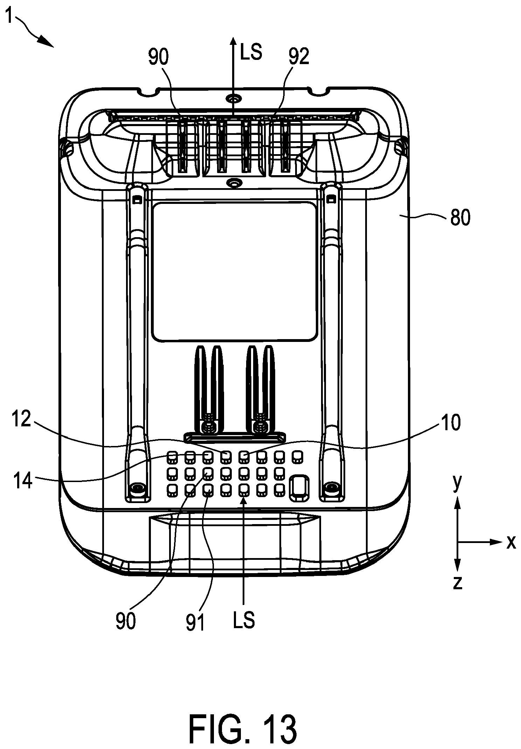

Des Weiteren weist im gezeigten Ausführungsbeispiel der Akkupack 1 ein Akkupackgehäuse 80 auf, wie in Fig. 13 und 14 gezeigt. Die Pouchzellen 21, und insbesondere die Leiterplatte 52, die Messelektronik 55, die elektrischen Zellverbinder 52eV", der mindestens eine elektrische Leistungsverbinder 29, das Stapelgehäuse 10, der Rahmen 59, die weitere Leiterplatte 53, die Leistungselektronik 56, die, insbesondere nochmals, weitere Leiterplatte 54, die Benutzerschnittstellenelektronik 57, die Übertragungselektronik 58, der Drucksensor 31, der innere Temperatursensor 36, der äußere Temperatursensor 37 und die Vergussmasse 99, sind innerhalb des Akkupackgehäuses 80 angeordnet.

Insbesondere ist das Akkupackgehäuse 80 als Gießform für die Vergussmasse 99 ausgebildet.

Außerdem weist im gezeigten Ausführungsbeispiel der Akkupack 1 mindestens einen Luftkühlkreislauf 90 aufweisend eine Anzahl von Lufteinlassöffnungen 91 und eine Anzahl von Luftauslassöffnungen 92 in dem Akkupackgehäuse 80 für eine Kühlluftströmung LS von der Anzahl von Lufteinlassöffnungen 91 an den Pouchzellen 21, insbesondere dem Stapelgehäuse 10, vorbei zu der Anzahl von Luftauslassöffnungen 92 zur Kühlung der Pouchzellen 21 auf. Der äußere Temperatursensor 37 ist in dem Luftkühlkreislauf 90 zwischen der Anzahl von Lufteinlassöffnungen 91 und der Anzahl von Luftauslassöffnungen 92, insbesondere der Anzahl von Lufteinlassöffnungen 91 und/oder der Anzahl von Luftauslassöffnungen 92 zugewandt, angeordnet.

Weiter weist im gezeigten Ausführungsbeispiel das Stapelgehäuse 10 eine thermische Verbindung mit den Pouchzellen 21 auf und ist thermisch leitfähig.

Insbesondere berührt das Stapelgehäuse 10, insbesondere berühren die Gehäusewände 13, 14, 15, 16, 17, die Pouchzellen 21 und zwischen den Pouchzellen 21 und den Gehäusewänden 15, 16, 17 ist Wärmeleitpaste.

Zudem weist im gezeigten Ausführungsbeispiel der Akkupack 1 eine maximale elektrische Antriebsleistung MAL von 3 kW auf. In alternativen Ausführungsbeispielen kann der Akkupack eine maximale elektrische Antriebsleistung von minimal 1 kW und/oder von maximal 10 kW aufweisen.

Zusätzlich weist im gezeigten Ausführungsbeispiel der Akkupack 1 eine Nennspannung NSP von 36 V auf. In alternativen Ausführungsbeispielen kann der Akkupack eine Nennspannung von minimal 10 V und/oder von maximal 100 V aufweisen.

Zusätzlich weist im gezeigten Ausführungsbeispiel der Akkupack 1 einen maximalen Energieinhalt MEI von 337 Wh auf. In alternativen Ausführungsbeispielen kann der Akkupack einen maximalen Energieinhalt von minimal 100 Wh und/oder von maximal 1000 Wh aufweisen.

Zusätzlich weist im gezeigten Ausführungsbeispiel der Akkupack 1 eine Masse m1 von 2 kg auf. In alternativen Ausführungsbeispielen kann der Akkupack eine Masse von minimal 0,5 kg und/oder von maximal 10 kg aufweisen.

Zusätzlich weist im gezeigten Ausführungsbeispiel der Akkupack 1 eine Höhe 1H, insbesondere in der Stapelrichtung z, von 5 cm, eine Breite 1B, insbesondere in der Richtung x, von 10 cm, und eine Tiefe 1T, insbesondere in der Richtung y, von 15 cm auf. In alternativen Ausführungsbeispielen kann der Akkupack eine Höhe von minimal 2,5 cm und/oder von maximal 10 cm, und/oder eine Breite von minimal 5 cm und/oder von maximal 20 cm, und/oder eine Tiefe von minimal 7,5 cm und/oder von maximal 30 cm aufweisen.

Fig. 1 zeigt ein erfindungsgemäßes Bearbeitungssystem 100. Das Bearbeitungssystem 100 weist den Akkupack 1 und ein elektrisch angetriebenes Bearbeitungsgerät 101 auf. Der Akkupack 1 und das Bearbeitungsgerät 101 sind zur elektrischen Verbindung miteinander zur Versorgung des Bearbeitungsgeräts 101 mit elektrischer Antriebsleistung AL von dem Akkupack 1 ausgebildet, insbesondere elektrisch verbunden.

Im Detail weist das Bearbeitungsgerät 101 eine Akkuaufnahme 102 auf. Die Akkuaufnahme 102 ist zum Aufnehmen des Akkupacks 1 ausgebildet. Insbesondere ist der Akkupack 1 aufgenommen.

In Fig. 1 ist das elektrisch angetriebene Bearbeitungsgerät 101 eine Säge101', ein Trennschleifer 101" oder ein Blasgerät 101"'. In alternativen Ausführungsbeispielen kann das Bearbeitungsgerät ein Hoch-Entaster, ein Freischneider, eine Heckenschere, ein Heckenschneider, ein Laubbläser, eine Astschere, ein Kehrgerät, eine Kehrwalze, eine Kehrbürste, ein Rasenmäher, ein Vertikutierer oder eine Grasschere sein.

Wie die gezeigten und oben erläuterten Ausführungsbeispiele deutlich machen, stellt die Erfindung einen Akkupack zur Versorgung eines elektrisch angetriebenen Bearbeitungsgeräts mit elektrischer Antriebsleistung, ein Bearbeitungssystem aufweisend einen solchen Akkupack und ein elektrisch angetriebenes Bearbeitungsgerät und ein Verfahren zur Herstellung eines Akkupacks zur Versorgung eines elektrisch angetriebenen Bearbeitungsgeräts mit elektrischer Antriebsleistung, wobei der Akkupack und das Verfahren jeweils verbesserte Eigenschaften aufweisen, bereit.

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- ein Stapelgehäuse (10), wobei das Stapelgehäuse (10) eine durch einen Gehäuserand (10R) definierte, gemeinsame Gehäuseöffnung (10O) aufweist, und
- mehrere Pouchzellen (21), wobei die Pouchzellen (21) Zelltabs (22) aufweisen und derart ausgebildet und in einem Stapel (20) innerhalb des Stapelgehäuses (10) angeordnet sind, dass die Zelltabs (22) mindestens mit Tabteilen (22T) an der gemeinsamen Gehäuseöffnung (10O) über mindestens einen Randabschnitt (10RA) des Gehäuserands (10R) hinausragen, wobei die Tabteile (22T) durch Schweißverbindungen (22S) miteinander unmittelbar elektrisch verbunden sind.

2. Akkupack (1) nach Anspruch 1,
- wobei die gemeinsame Gehäuseöffnung (10O) die einzige Gehäuseöffnung für die Zelltabs (22) ist, und/oder
- wobei die Pouchzellen (21) derart ausgebildet und in dem Stapel (20) angeordnet sind, dass die Zelltabs (22) auf einer gemeinsamen Tabseite (20V) des Stapels (20) angeordnet sind.

3. Akkupack (1) nach einem der vorhergehenden Ansprüche,
- wobei der Gehäuserand (10R) eine Öffnungsebene (10E) der Gehäuseöffnung (10O) definiert, und
- wobei die Tabteile (22T) parallel zu der Öffnungsebene (10E) verlaufen.

4. Akkupack (1) nach einem der vorhergehenden Ansprüche, wobei der Akkupack (1) aufweist:
- mindestens einen elektrischen Leistungsverbinder (29), wobei der elektrische Leistungsverbinder (29) mit einem der Tabteile (22T) durch eine Schweißverbindung (29S), insbesondere unmittelbar, elektrisch verbunden ist.

5. Akkupack (1) nach einem der vorhergehenden Ansprüche,
- wobei das Stapelgehäuse (10) quaderförmig ist und mindestens vier Gehäusewände (13, 14, 15, 16, 17) aufweist, wobei Wandränder (13R, 14R, 15R, 16R) von vier der Gehäusewände (13, 14, 15, 16) die Gehäuseöffnung (10O) definieren.

6. Akkupack (1) nach einem der vorhergehenden Ansprüche,
- wobei das Stapelgehäuse (10) eine erste Gehäusewand (13) und eine zweite Gehäusewand (14) aufweist, wobei die zweite Gehäusewand (14) zu der ersten Gehäusewand (13) mit einem Abstand (10A) gegenüberliegend angeordnet ist, wobei der Stapel (20) zwischen der ersten Gehäusewand (13) und der zweiten Gehäusewand (14) angeordnet ist und eine Höhe (20H) des Stapels (20) in einer Stapelrichtung (z) durch die erste Gehäusewand (13) und die zweite Gehäusewand (14) begrenzt ist.

7. Akkupack (1) nach Anspruch 6,
- wobei das Stapelgehäuse (10) ein erstes Gehäuseteil (11) und ein zweites Gehäuseteil (12) aufweist, wobei das erste Gehäuseteil (11) die erste Gehäusewand (13) aufweist, wobei das zweite Gehäuseteil (12) die zweite Gehäusewand (14) aufweist und wobei das erste Gehäuseteil (11) und das zweite Gehäuseteil (12) durch mindestens eine Schweißverbindung (10S) miteinander mechanisch verbunden sind.

8. Akkupack (1) nach Anspruch 6 oder 7, wobei der Akkupack (1) aufweist:
- mindestens ein Ausgleichselement (60), wobei das mindestens eine Ausgleichselement (60) in dem Stapel (20) angeordnet ist, wobei das mindestens eine Ausgleichselement (60) sich über einen Großteil einer Fläche (21F) der Pouchzellen (21) erstreckt und dazu ausgebildet ist, über eine Ausgleichsdicke (60D) des mindestens einen Ausgleichselements (60) die Höhe (20H) des Stapels (20) an den Abstand (10A) zwischen der ersten Gehäusewand (13) und der zweiten Gehäusewand (14) anzupassen.

9. Akkupack (1) nach einem der vorhergehenden Ansprüche,
- wobei die Pouchzellen (21) derart ausgebildet und in dem Stapel (20) angeordnet sind, dass die Zelltabs (22) in zwei Tabspalten (22a, 22b) angeordnet sind, wobei abgewandte Endgrenzen (22aL, 22bR) der Tabspalten (22a, 22b) einen Zwischenbereich (22Z) definieren, und
- wobei der Akkupack (1) eine Leiterplatte (52) aufweist, wobei die Leiterplatte (52) innerhalb des Zwischenbereichs (22Z) angeordnet ist und mit mehreren der Zelltabs (22), insbesondere Tabteilen (22T), insbesondere jeweils, durch eine Schweißverbindung (52S) elektrisch verbunden ist.

10. Akkupack (1) nach Anspruch 9, wobei der Akkupack (1) aufweist:
- einen Rahmen (59), wobei der Rahmen (59) die Leiterplatte (52) trägt und an der Gehäuseöffnung (10O) angeordnet ist,
- wobei die Zelltabs (22), insbesondere Tabteile (22T), und die Leiterplatte (52) mittels des Stapelgehäuses (10) und des Rahmens (59) zueinander positioniert sind.

11. Akkupack (1) nach einem der vorhergehenden Ansprüche,
- wobei der Akkupack (1) eine maximale elektrische Antriebsleistung (MAL) von minimal 1 kW, insbesondere von minimal 2 kW, und/oder von maximal 10 kW, insbesondere von maximal 5 kW, aufweist, und/oder
- wobei der Akkupack (1) eine Nennspannung (NSP) von minimal 10 V, insbesondere von minimal 20 V, und/oder von maximal 100 V, insbesondere von maximal 50 V, aufweist, und/oder
- wobei der Akkupack (1) einen maximalen Energieinhalt (MEI) von minimal 100 Wh, insbesondere von minimal 200 Wh, und/oder von maximal 1000 Wh, insbesondere von maximal 500 Wh, aufweist, und/oder
- wobei der Akkupack (1) eine Masse (m1) von minimal 0,5 kg, insbesondere von minimal 1 kg, und/oder von maximal 10 kg, insbesondere von maximal 5 kg, aufweist, und/oder
- wobei der Akkupack (1) eine Höhe (1H) von minimal 2,5 cm und/oder von maximal 10 cm, und/oder eine Breite (1B) von minimal 5 cm und/oder von maximal 20 cm, und/oder eine Tiefe (1T) von minimal 7,5 cm und/oder von maximal 30 cm aufweist.

12. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

13. Verfahren zur Herstellung eines Akkupacks (1), insbesondere nach einem der Ansprüche 1 bis 11, zur Versorgung eines elektrisch angetriebenen Bearbeitungsgeräts (101) mit elektrischer Antriebsleistung (AL), wobei das Verfahren die Schritte aufweist:
a) Anordnen von mehreren Pouchzellen (21) derart in einem Stapel (20) innerhalb eines Stapelgehäuses (10), wobei das Stapelgehäuse (10) eine durch einen Gehäuserand (10R) definierte, gemeinsame Gehäuseöffnung (10O) aufweist, wobei die Pouchzellen (21) Zelltabs (22) aufweisen und derart ausgebildet sind, dass die Zelltabs (22) mindestens mit Tabteilen (22T) an der gemeinsamen Gehäuseöffnung (10O) über mindestens einen Randabschnitt (10RA) des Gehäuserands (10R) hinausragen, und
b) zeitlich nach dem Anordnen Verschweißen der Tabteile (22T) zum unmittelbaren elektrischen Verbinden der Tabteile (22T) miteinander.

14. Verfahren nach Anspruch 13,
- wobei der Gehäuserand (10R) eine Öffnungsebene (10E) der Gehäuseöffnung (10O) definiert,
- wobei die Tabteile (22T) parallel zu der Öffnungsebene (10E) verlaufen, und
- wobei der Schritt b) aufweist: Anordnen einer Schweißunterlage (150) mindestens teilweise zwischen mindestens einem der parallel verlaufenden Tabteile (22T) und dem Randabschnitt (10RA) und Verschweißen des Tabteils (22T) mittels der Schweißunterlage (150).

15. Verfahren nach Anspruch 13 oder 14,
- wobei das Stapelgehäuse (10) ein erstes Gehäuseteil (11) und ein zweites Gehäuseteil (12) aufweist, wobei das erste Gehäuseteil (11) eine erste Gehäusewand (13) aufweist und wobei das zweite Gehäuseteil (12) eine zweite Gehäusewand (14) aufweist,
- wobei der Schritt a) aufweist: Anordnen des Stapels (20) auf der ersten Gehäusewand (13) und zeitlich danach Anordnen der zweiten Gehäusewand (14) auf dem Stapel (20) derart, dass die zweite Gehäusewand (14) zu der ersten Gehäusewand (13) mit einem Abstand (10A) gegenüberliegend angeordnet ist, dass der Stapel (20) zwischen der ersten Gehäusewand (13) und der zweiten Gehäusewand (14) angeordnet ist und eine Höhe (20H) des Stapels (20) in einer Stapelrichtung (z) durch die erste Gehäusewand (13) und die zweite Gehäusewand (14) begrenzt ist, und
- wobei der Schritt b) aufweist: Verschweißen des ersten Gehäuseteils (11) und des zweiten Gehäuseteils (12) zum, insbesondere unmittelbaren, mechanischen Verbinden des ersten Gehäuseteils (11) und des zweiten Gehäuseteils (12) miteinander.
